(19) Europäisches Patentamt
European Patent Office
Office européen des brevets

(11) **EP 1 688 447 B1**

(12) # EUROPEAN PATENT SPECIFICATION

(45) Date of publication and mention
of the grant of the patent:
**10.09.2008 Bulletin 2008/37**

(51) Int Cl.:
***C08G 18/44*** *(2006.01)*

(21) Application number: **04725646.6**

(22) Date of filing: **01.04.2004**

(86) International application number:
**PCT/JP2004/004776**

(87) International publication number:
**WO 2005/049685 (02.06.2005 Gazette 2005/22)**

(54) **POLYURETHANE RESIN FOR ARTIFICIAL LEATHER AND POROUS SHEET MATERIAL**

POLYURETHANHARZ FÜR KUNSTLEDER UND PORÖSES FLÄCHENMATERIAL

RESINE DE POLYURETHANNE DESTINEE AU CUIR ARTIFICIEL ET MATERIAU EN FEUILLE POREUSE

(84) Designated Contracting States:
**IT**

(30) Priority: **18.11.2003 JP 2003387542**

(43) Date of publication of application:
**09.08.2006 Bulletin 2006/32**

(73) Proprietor: **Sanyo Chemical Industries, Ltd.
Kyoto-shi,
Kyoto 605-0995 (JP)**

(72) Inventors:
• **KOBAYASHI, Yoshio,
Sanyo Chemical Industries, Ltd.
Kyoto-shi,
Kyoto 605-0995 (JP)**

• **OGAWA, Hiroyuki,
Sanyo Chemical Industries, Ltd.
Kyoto-shi,
Kyoto 605-0995 (JP)**

(74) Representative: **Gerbino, Angelo et al
Jacobacci & Partners S.p.A.
Corso Emilia, 8
10152 Torino (IT)**

(56) References cited:
WO-A1-98/27133       JP-A- 2 158 617
JP-A- 3 234 813       JP-A- 5 043 646
JP-A- 60 195 117      JP-A- 62 022 817
JP-A- 2001 323 042    JP-A- 2003 183 376
US-A- 5 070 172       US-A- 5 290 905

EP 1 688 447 B1

**Description**

The present invention relates to a polyurethane resin for artificial leather manufacture and to a porous sheet obtained by providing a substrate with a polyurethane resin by a wet membrane formation method.

It is well known in the art that when, in producing polyurethane resins for artificial leather manufacture, a polycarbonate diol, for example 1,6-hexanediol polycarbonate diol, is used as the high-molecular diol component, improvements are achieved in hydrolysis resistance and weather resistance but this strategy has drawbacks as well, resulting in coarse textures and poor low-temperature resistance, namely poor low-temperature characteristics.

The polycarbonate diol derived from 1,6-hexanediol is highly crystalline, and the soft segment component in the polyurethanes obtained from this polycarbonate diol causes crystallization, which leads to loss of elasticity, coarse textures and/or poor low-temperature characteristics.

The techniques so far disclosed for lowering the crystallinity of the polycarbonate diol consist in using a copolycarbonate diol derived from an alkanediol containing 6 carbon atoms and an alkanediol containing 9 carbon atoms (cf. e.g. Japanese Kokai Publication Sho60-195117), using a copolycarbonate diol derived from an alkanediol containing 5 carbon atoms and an alkanediol containing 6 carbon atoms (cf. e.g. Japanese Kokai Publication Hei02-289616), using a copolycarbonate diol derived from a side chain alkanediol containing 3 to 10 carbon atoms and an alkanediol containing 6 carbon atoms (cf. e.g. Japanese Kokai Publication Hei02-158617), using a copolycarbonate diol derived from a straight-chain alkanediol containing 9 carbon atoms and a branched-chain alkanediol containing 9 carbon atoms and cyclohexanedimethanol (cf. e.g. Japanese Kokai Publication Hei03-140318), using a copolycarbonate diol derived from an alkanediol containing 4 carbon atoms and an alkanediol containing 5 carbon atoms (cf. e.g. Japanese Kokai Publication Hei04-7327 and Japanese Kokai Publication Hei05-32754), using a copolycarbonate diol derived from an alkanediol containing 4 carbon atoms and an alkanediol containing 6 carbon atoms (cf. e.g. Japanese Kokai Publication Hei05-51428), or the like.

While the polyurethane resins produced by using these copolycarbonate diols have an appropriate degree of elasticity and show improved low-temperature characteristics, the porous sheets obtained by wet coagulation of those polyurethane resins can hardly be said to be satisfactory in microporosity and in flexibility.

Thus, it is an object of the present invention to provide a porous sheet material which is obtainable by wet coagulation of a polyurethane resin and is uniformly microporous and gives a feeling rich in flexibility.

As a result of intensive investigations made by them to accomplish the above object, the present inventors have now completed the present invention.

That is, the present invention provides

a polyurethane resin for artificial leather manufacture

which is obtained by reacting a high-molecular diol component (A) comprising a polycarbonate diol (a1) derived from an alkanediol containing 4 to 6 carbon atoms and a polycarbonate diol (a2) derived from an alkanediol containing 7 to 12 carbon atoms, an organic diisocyanate (B) and a chain extender (C), either a1 or a2 being a copolycarbonate diol and a porous sheet material made from said polyurethane resin.

The polyurethane resin (D) for artificial leather manufacture, of the invention, is obtained by reacting the high-molecular diol component (A), the organic diisocyanate (B) and the chain extender (C),

The high-molecular diol component (A) to be used in the present invention comprises a polycarbonate diol (a1) derived from an alkanediol containing 4 to 6 carbon atoms and a polycarbonate diol (a2) derived from an alkanediol containing 7 to 12 carbon atoms.

The high-molecular diol component (A) comprises a polycarbonate diol (a1) and a polycarbonate diol (a2), and these can be used in an arbitrary proportion.

The weight percentage of (a1) to the sum of (a1) and (a2) is preferably not lower than 10%, more preferably not lower than 15%, most preferably not lower than 20%, so that the rate of coagulation may not be excessively high. On the other hand, the above percentage is preferably not higher than 80%, more preferably not higher than 70%, most preferably not higher than 60%, so that the rate of coagulation may not be excessively slow.

The use of a polycarbonate diol derived from an alkanediol containing 3 or a smaller number of carbon atoms is unfavorable since the resulting polyurethane resin has an excessively high level of hydrophilicity, so that the rate of coagulation on the occasion of wet membrane formation is slow and the porous sheets obtained tend to become deteriorated in appearance due to agglutination, and the like. The use of a polycarbonate diol derived from an alkanediol containing 13 or more carbon atoms is also unfavorable since the resulting polyurethane resin has an excessively high level of hydrophobicity, so that the rate of coagulation on the occasion of wet membrane formation is rapid, giving porous sheets having a cellular structure containing macropores and lacking in uniformity.

On the occasion of wet membrane formation using a solution of a polyurethane resin, the rate of coagulation of the polyurethane resin and the rate of substitution of a coagulation bath solvent for the solvent in the polyurethane resin solution can be well balanced and harmonized by adjusting the usage ratio between (a1) and (a2), with the result that the porous sheets obtained are uniformly microporous sheets rich in flexibility.

The diol (a1) is a polycarbonate diol obtained by reacting a low-molecular diol comprising at least one alkanediol containing 4 to 6 carbon atoms, preferably 5 or 6 carbon atoms, more preferably 6 carbon atoms, with a lower alcohol (e.g. methanol)-derived carbonic diester. As the alkanediol containing 4 to 6 carbon atoms, there may be mentioned 1,4-butanediol, 1,5-pentanediol, 2-methyl-1,3-propanediol, neopentyl glycol, 1,6-hexanediol, 3-methyl-1,5-pentanediol, 2-ethyl-1, 3-propanediol and mixed diols composed of two or more of these. Preferred among these are 1,4-butanediol, 1,5-pentanediol, 1,6-hexanediol, 3-methyl-1,5-pentanediol and mixed diols composed two or more of these. More preferred are 1,6-hexanediol, 3-methyl-1,5-pentanediol, 1, 5-pentanediol and mixed diols composed of two or more of these. Most preferred are 1,6-hexanediol and 3-methyl-1,5-pentanediol and mixed diols composed thereof.

The diol (a2) is a polycarbonate diol obtained by reacting a low-molecular diol comprising at least one alkanediol containing 7 to 12 carbon atoms, preferably 9 to 11 carbon atoms, more preferably 9 or 10 carbon atoms, most preferably 9 carbon atoms, with a lower alcohol (e.g. methanol)-derived carbonic diester. As the alkanediol containing 7 to 12 carbon atoms, there may be mentioned 1,7-heptanediol, 1,8-octanediol, 1,9-nonanediol, 1,10-decanediol, 1,12-dodecanediol, 2-methyl-1,8-octanediol, 2,4-diethyl-1,5-pentanediol, 2,7-dimethyl-1,8-octanediol, 2,8-dimethyl-1,9-nonanediol and mixed diols composed of two or more of these. Preferred among them are 1,8-octanediol, 1,9-nonanediol, 2-methyl-1,8-octanediol, 2,4-diethyl-1,5-pentanediol, 2,7-dimethyl-1,8-octanediol, 2,8-dimethyl-1,9-nonanediol and mixed diols composed of two or more of these. More preferred are 1,9-nonanediol, 2-methyl-1,8-octanediol, 2,7-dimethyl-1,8-octanediol and mixed diols composed of two or more of these. Most preferred are 1,9-nonanediol, 2-methy-1,8-octandiol and mixed diols composed thereof.

From the flexibility viewpoint, each of (a1) and (a2) is a copolycarbonate diol.

As examples of the copolycarbonate diol (a1), there may be mentioned, for example, 1,4-butanediol/1,5-pentanediol copolycarbonate diol, 1,4-butanediol/1,6-hexanediol copolycarbonate diol, 1,5-pentanediol/1,6-hexanediol copolycarbonate diol, 2-methyl-1,3-propanediol/1,6-hexanediol copolycarbonate diol, neopentyl glycol/1,6-hexanediol copolycarbonate diol, 3-methyl-1,5-pentanediol/1,6-hexanediol copolycarbonate diol, 2-ethyl-1,3-propanediol/1,6-hexanediol copolycarbonate diol and mixed copolycarbonate diols composed of two or more of these. Preferred among these are 1,5-pentanediol/1,6-hexanediol copolycarbonate diol, neopentyl glycol/1,6-hexanediol copolycarbonate diol, 2-ethyl-1,3-propanediol/1,6-hexanediol copolycarbonate diol, 3-methyl-1,5-pentanediol/1,6-hexanediol copolycarbonate diol and mixed copolycarbonate diols composed of two or more of these. Particularly preferred is 3-methyl-1,5-pentanediol/1,6-hexanediol copolycarbonate diol.

As examples of the copolycarbonate diol (a2), there may be mentioned, for example, 1,7-heptanediol/1,8-octanediol copolycarbonate diol, 1,8-octanediol/1,9-nonanediol copolycarbonate diol, 1,9-nonanediol/1,10-decanediol copolycarbonate diol, 1,9-nonanediol/1,12-dodecanediol copolycarbonate diol, 1,9-nonanediol/2-methyl-1,8-octanediol copolycarbonate diol, 1,9-nonanediol/2,4-diethyl-1,5-pentanediol copolycarbonate diol, 1,9-nonanediol/2,7-dimethyl-1,8-octanediol copolycarbonate diol, 1,9-nonanediol/2,8-dimethyl-1,9-nonanediol copolycarbonate diol and mixed copolycarbonate diols composed of two or more of these. Preferred among these are 1,9-nonanediol/1,10-dencanediol copolycarbonate diol, 1,9-nonanediol/2-methyl-1,8-octanediol copolycarbonate diol, 1,9-nonanediol/2,4-diethyl-1,5-pentanediol copolycarbonate diol, 1,9-nonanediol/2,7-dimethyl-1,8-octanediol copolycarbonate diol, 1,9-nonanediol/2,8-dimethyl-1,9-nonanediol copolycarbonate diol and mixed copolycarbonate diols composed of two or more of these. Particularly preferred is 1,9-nonanediol/2-methyl-1,8-octanediol copolycarbonate diol.

From the flexibility viewpoint, each of (a1) and (a2) is more preferably a copolycarbonate diol derived from a straight-chain alkanediol and a side chain-containing alkanediol.

From the flexibility viewpoint, at least one of (a1) and (a2) in the high-molecular diol component (A) is preferably a copolycarbonate diol and, from the flexibility viewpoint, each of (a1) and (a2) is independently a copolycarbonate diol.

As examples of the case where either of (a1) and (a2) is a copolycarbonate diol, there may be mentioned the following combinations: 1,6-hexanediol polycarbonate diol and 1,9-nonanediol/2-methyl-1,8-octanediol copolycarbonate diol, 1,6-hexanediol polycarbonate diol and 1,9-nonanediol/2,4-diethyl-1,5-pentanediol copolycarbonate diol, 1,4-butanediol/1,5-pentanediol copolycarbonate diol and 1,9-nonanediol polycarbonate diol, 1,4-butanediol/1,6-hexanediol copolycarbonate diol and 1,9-nonanediol polycarbonate diol, 1,5-pentanediol/1,6-hexanediol copolycarbonate diol and 1,9-nonanediol polycarbonate diol, and 3-methyl-1,5-pentanediol/1,6-hexanediol copolycarbonate diol and 1,9-nonanediol polycarbonate diol.

As examples of the case where each of (a1) and (a2) is independently a copolycarbonate diol, there may be mentioned the following combinations: 1,4-butanediol/1,5-pentanediol copolycarbonate diol and 1,9-nonanediol/2-methyl-1,8-octanediol copolycarbonate diol, 1,4-butanediol/1,6-hexanediol copolycarbonate diol and 1,9-nonanediol/2-methyl-1,8-octanediol copolycarbonate diol, 1,5-pentanediol/1,6-hexanediol copolycarbonate diol and 1,9-nonanediol/2-methyl-1,8-octanediol copolycarbonate diol, 3-methyl-1,5-pentanediol/1,6-hexanediol copolycarbonate diol and 1,9-nonanediol/2-methyl-1,8-octanediol copolycarbonate diol, 3-methyl-1,5-pentanediol/1,6-hexanediol copolycarbonate diol and 1,9-nonanediol/2,4-diethyl-1,5-pentanediol copolycarbonate diol, and 3-methyl-1,5-pentanediol/1,6-hexanediol copolycarbonate diol and 1,9-nonanediol/2,8-dimethyl-1,9-nonanediol copolycarbonate diol. Preferred among these are the following combinations: 1,5-pentanediol/1,6-hexanediol copolycarbonate diol and 1,9-nonanediol/2-methyl-1,8-octanediol copolycarbonate diol, 3-methyl-1,5-pentanediol/1,6-hexanediol copolycarbonate diol and 1,9-nonanediol/2-methyl-1,8-octanediol copolycarbonate diol, 3-methyl-1,5-pentanediol/1,6-hexanediol copolycarbonate diol and 1,9-nonanediol/2,4-diethyl-1,5-pentanediol copolycarbonate diol, and 3-methyl-1,5-pentanediol/1,6-hexanediol copolycarbonate diol and 1,9-nonanediol/2,8-dimethyl-1,9-nonanediol copolycarbonate diol. Particularly preferred is the combination: 3-methyl-1,5-pentanediol/1,6-hexanediol copolycarbonate diol and 1,9-nonanediol/2-methyl-1,8-octanediol copolycarbonate diol.

From the feeling viewpoint, each of (a1) and (a2) preferably has, independently, a number average molecular weight of not lower than 500, more preferably not lower than 700, still more preferably not lower than 1,000 and, from the tenacity viewpoint, each preferably has, independently, a number average molecular weight of not higher than 5,000, more preferably not higher than 4,500, still more preferably not higher than 4,000.

The number average molecular weight of each of (a1) and (a2) is determined based on the hydroxyl value.

The hydroxyl value is measured by the method prescribed in JIS K 0070-1992 (potentiometric titration).

As the method of producing (a1) and (a2), there may be mentioned various methods described, for example, in U.S. Patent No. 4,013,702, U.S. Patent No. 4,105,641 and Schnell: Polymer Reviews, vol. 9, pp. 9-20 (1964).

U. S. Patent No. 4,013,702 and U.S. Patent No. 4,105,641 describe the synthesis of 1,6-hexanediol/1,4-butanediol copolycarbonate diol. Thus, these disclose a method of producing copolycarbonate diols.

The high-molecular diol component (A) may comprise a further high-molecular diol (a3) other than either (a1) or (a2) at levels at which the physical properties of the polyurethane resin will not be adversely affected.

The diol (a3) can be used preferably in an amount of 0 to 40% by weight, more preferably 5 to 35% by weight, relative to the total amount of the high-molecular diol component (A).

The other high-molecular diol (a3) may be a polyether diol or polyester diol having a number average molecular weight of 500 to 5,000, preferably 1,000 to 4,000. The number average molecular weight of (a3) is determined based on the hydroxyl value.

As the polyether diol, there may be mentioned, for example, compounds having a structure resulting from addition of an alkylene oxide (hereinafter, "AO" for short) to a low-molecular diol, and mixtures of two or more of these.

The low-molecular diol mentioned above includes ethylene glycol, diethylene glycol, propylene glycol, 1,4-butanediol, 1,3-butanediol, neopentyl glycol, 1,6-hexanediol, 3-methyl-1,5-pentanediol; low-molecular diols containing a ring structure [e.g. bis(hydroxymethyl)cyclohexane, bis (hydroxyethyl) benzene, bisphenol A-ethylene oxide adducts], and mixtures of two or more of these.

As the AO, there may be mentioned ethylene oxide (hereinafter, "EO" for short), propylene oxide ("PO" for short), tetrahydrofuran ("THF" for short), 3-methyltetrahydrofuran ("3-M-THF" for short), and the like.

The AO may comprise a single species or a combination of two or more species. In the latter case, the mode of addition may be blockwise or random or of a mixed type comprising both.

Preferred among such AO species are EO alone, PO alone, THF alone, 3-M-THF alone, and the combinations PO and EO, PO and/or EO and THF, and THF and 3-M-THF (in the case of combined use, random addition, block addition and a mixed system comprising both being included).

As specific examples of such polyether diol, there may be mentioned polyethylene glycol, polypropylene glycol, polytetramethylene ether glycol (hereinafter, "PTMG" for short), poly-3-methyltetramethylene ether glycol, THF/EO copolymer diol and THF/3-M-THF copolymer diol. Preferred among these is PTMG.

The addition of AO to the low-molecular diol can be carried out in the conventional manner at ordinary pressure or under pressure in a single step or a multiple of steps without using any catalyst or in the presence of a catalyst (e.g. alkali catalyst, amine type catalyst, acid catalyst) (in particular in the latter half of the AO addition step).

The polyester diol may be a polyester diol obtained by reacting a low-molecular diol and/or a polyether diol having a molecular weight of not higher than 1,000 with a dicarboxylic acid, or a polylactone diol obtained by ring opening polymerization of a lactone.

The low-molecular diol mentioned above includes ethylene glycol, diethylene glycol, propylene glycol, 1,4-butanediol, 1,3-butanediol, neopentyl glycol, 1,6-hexanediol, 3-methyl-1,5-pentanediol; low-molecular diols containing a ring structure [e.g. bis(hydroxymethyl)cyclohexane, bis (hydroxyethyl) benzene, bisphenol A-ethylene oxide adducts], and mixtures of two or more of these.

The dicarboxylic acid includes aliphatic dicarboxylic acids (succinic acid, adipic acid, azelaic acid, sebacic acid, etc.), aromatic dicarboxylic acids (terephthalic acid, isophthalic acid, phthalic acid, etc.), ester-forming derivatives of these dicarboxylic acids [acid anhydrides, lower alkyl (C1 to C4) esters, etc.], and mixtures of two or more of these; and the lactone includes ε-caprolactone, γ-butyrolactone, γ-valerolactone, and mixtures of two or more of these.

The polyesterification can be effected in the conventional manner, for example by reacting (condensing) the low-molecular diol with the dicarboxylic acid or allowing the lactone to add to an initiator (low-molecular diol).

As specific examples of such a polyester diol, there may be mentioned polyethylene adipate diol, polybutylene adipate diol, polyneopentyl adipate diol, polyhexamethylene adipate diol, polyethylenebutylene adipate diol, polydiethylene adipate diol, polybutylene sebacate diol, polycaprolactone diol and the like.

Usable as the organic diisocyanate (B) are those so far used in polyurethane manufacture. Such organic diisocyanates include aromatic diisocyanates containing 6 to 20 carbon atoms (except for the carbon atoms contained in the NCO groups; hereinafter the same shall apply), aliphatic diisocyanates containing 2 to 18 carbon atoms, alicyclic diisocyanates containing 4 to 15 carbon atoms, aromatic group-containing aliphatic diisocyanates containing 8 to 15 carbon atoms, modifications of these diisocyanates (carbodiimide modifications, urethane modifications, uretodione modifications, etc.) and mixtures of two or more of these.

As specific examples of the aromatic diisocyanates, there may be mentioned 1,3- and/or 1,4-phenylene diisocyanate, 2,4-and/or 2,6-tolylene diisocyanate, 2,4'- and/or 4,4'-diphenylmethanediisocyanate (hereinafter, "MDI" for short), 4,4'-diisocyanatobiphenyl, 3,3'-dimethyl-4,4'-diisocyanatobiphenyl, 3,3'-dimethyl-4,4'-diisocyanatodiphenylmethane, 1,5-naphthylene diisocyanate and the like.

As specific examples of the aliphatic diisocyanates, there may be mentioned ethylene diisocyanate, tetramethylene diisocyanate, hexamethylene diisocyanate, dodecamethylene diisocyanate, 2,2,4-trimethylhexamethylene diisocyanate, lysinediisocyanate, methyl 2,6-diisocyanatocaproate, bis(2-isocyanatoethyl) carbonate, 2-isocyanatoethyl 2,6-diisocyanatohexanoate and the like.

As specific examples of the above-mentioned alicyclic diisocyanates, there may be mentioned isophoronediisocyanate, dicyclohexylmethane-4,4'-diisocyanate, cyclohexylene diisocyanate, methylcyclohexylene diisocyanate, bis(2-isocyanatoethyl) 4-cyclohexylene-1,2-dicarboxylate, 2,5- and/or 2,6-norbornanediisocyanate and the like.

As specific examples of the above-mentioned aromatic group-containing aliphatic diisocyanates, there may be mentioned m- and/or p-xylylene diisocyanate, $\alpha,\alpha,\alpha',\alpha'$-tetramethylxylylene diisocyanate and the like.

Among these, aromatic diisocyanates are preferred, and MDI is most preferred.

The chain extender (C) includes water, low-molecular diols (e.g. ethylene glycol, propylene glycol, 1,3-butylene glycol, 1,4-butanediol, 1,6-hexanediol, diethylene glycol, neopentyl glycol), alicyclic diols [1,4-bis(hydroxymethyl)cyclohexane etc.], aromatic diols [1,4-bis(hydroxyethyl)benzene etc.], aliphatic diamines (ethylenediamine etc.), alicyclic diamines (isophoronediamine etc.), aromatic diamines (4,4'-diaminodiphenylmethane etc.), aromatic group-containing aliphatic diamines (xylylenediamine etc.), alkanolamines (ethanolamine etc.), hydrazine, dihydrazides (adipic dihydrazide etc.) and the like, and mixtures of two or more of these. Among them, water, low-molecular diols and aromatic diamines are preferred, and water, ethylene glycol, 1,4-butanediol, 4,4'-diaminodiphenylmethane and mixtures of two or more of these are more preferred.

The chain extender (C) preferably has a molecular weight of not higher than 250.

In producing the polyurethane resin (D) according to the invention, the equivalent ratio between the organic diisocyanate (B) and the active hydrogen-containing compounds comprising the high-molecular diol (A) and chain extender (C), namely the ratio (B) : [(A) + (C)], is preferably (0.95 to 1.1) :1, more preferably (0.97 to 1.05):1, since a polyurethane resin with a high degree of polymerization can be produced at such equivalent ratio.

The active hydrogen group equivalent ratio between the high-molecular diol (A) and chain extender (C), namely (A) : (C), is preferably 1:0.2 to 10, more preferably 1:0.5 to 5.

The polyurethane resin (D) of the invention can be produced in the conventional manner, for example by the one-shot method comprising reacting the high-molecular diol (A), organic diisocyanate (B) and chain extender (C) together simultaneously, or the prepolymer method comprising reacting first (A) with (B) and further reacting the thus-obtained urethane prepolymer with (C).

The reaction temperature may be the same as the temperature generally employed in polyurethane formation reactions, preferably 20 to 160°C, more preferably 40 to 80°C.

In necessary, a polymerization terminator, for example a monohydric alcohol (e.g. methanol, ethanol, butanol, cyclohexanol) or a monoamine (e.g. diethylamine, dibutylamine, cyclohexylamine), can be used.

For promoting the reaction, a catalyst generally used in polyurethane formation reactions [e.g. an amine type catalyst (e.g. triethylamine, triethylenediamine), a tin catalyst (e.g. dibutyltin dilaurate, dioctyltin dilaurate)] can be used according to need. The level of addition of the catalyst is preferably not higher than 1% by weight relative to the polyurethane resin to be produced.

The polyurethane resin (D) of the invention is produced in the presence of an organic solvent or without using any solvent and, when it is produced in the absence of a solvent, an organic solvent may be added afterwards or the resin once produced in the form of a solid may be dissolved in a solvent.

Usable as the organic solvent are those mentioned below.

As the organic solvent (G) to be used in the production of the polyurethane resin (D), there may be mentioned, for example, amide solvents [N,N-dimethylformamide (hereinafter, "DMF" for short), N,N-dimethylacetamide, N-methylpyrrolidone, etc.]; sulfoxide solvents [dimethyl sulfoxide (hereinafter, "DMSO" for short) etc.]; ketone solvents (methyl ethyl ketone etc.); ether solvents (dioxane, THF, etc.); ester solvents (methyl acetate, ethyl acetate, butyl acetate, etc.); aromatic solvents (toluene, xylene, etc.); and mixtures of two or more of these. Preferred among them are amide solvents, and DMF is particularly preferred.

The porous sheet material of the invention comprises the above-mentioned polyurethane resin.

EP 1 688 447 B1

The porous sheet material of the invention is obtained by applying a solution (E) of the polyurethane resin (D) to a substrate, followed by wet treatment.

The above-mentioned solution (E) is a solution of the above-mentioned resin (D) in the above-mentioned solvent (G), and the resin concentration of the solution (E) is preferably not lower than 10% by weight from the resin strength viewpoint but preferably not higher than 50% by weight from the viscosity stability and workability viewpoint. More preferably it is 12 to 35% by weight.

In the polyurethane resin (D) and the solution (E) thereof, there may be incorporated one or more of colorants such as titanium oxide, various stabilizers such as ultraviolet absorbers (benzophenone type, benzotriazole type, etc.) and antioxidants [hindered phenols such as 4,4-butylidenebis(3-methyl-6-tert-butylphenol); organic phosphites such as triphenyl phosphite and trichloroethyl phosphite, etc.]; inorganic fillers (calcium carbonate etc.); coagulation adjusting agents known in the art [higher alcohols: cetyl alcohol, stearyl alcohol, etc. (Japanese Kokoku Publication Sho42-22719), crystalline organic compounds: purified octadecyl alcohol, purified stearyl alcohol, etc. (Japanese Kokoku Publication Sho56-41652), hydrophobic nonionic surfactants: sorbitan monostearate, sorbitan palmitate, etc. (Japanese Kokoku Publication Sho45-39634 and Japanese Kokoku Publication Sho45-39635)] and the like. The total level of addition (content) of these various additives is preferably not higher than 10% by weight, more preferably 0.5 to 5% by weight, relative to the polyurethane resin (D).

From the rate of coagulation viewpoint, the coagulation value of the polyurethane resin (D) of the invention is preferably not lower than 2, more preferably not lower than 2.3, still more preferably not lower than 2.5, but preferably not higher than 5, more preferably not higher than 4.7, still more preferably not higher than 4.5.

The coagulation value is determined as follows. A 1% (by weight) solution of the polyurethane resin in DMF is prepared and, water at 25°C is added dropwise to 100 g of that solution while stirred using a stirrer and adjusting the temperature to 25°C. The coagulation value is the amount (ml) of water added dropwise as required for that solution (transparent solution) to become turbid.

The coagulation value denotes the degree of hydrophobicity of the polyurethane resin and serves as an indicator of the rate of coagulation of the polyurethane resin on the occasion of producing a porous sheet by the wet membrane formation method comprising application of a solution of the polyurethane resin to a substrate.

When, for example, a high-molecular diol high in hydrophobicity is used, the coagulation value of the polyurethane resin becomes small and, when a high-molecular diol high in hydrophilicity is used, the coagulation value of the polyurethane resin becomes great.

The number average molecular weight of the polyurethane resin (D) is preferably not lower than 20,000 from the resin strength viewpoint and, from the viscosity stability and workability viewpoint, it is preferably not higher than 500,000. More preferably, it is not lower than 30,000 but not higher than 150,000. The number average molecular weight of the polyurethane resin (D) is determined by gel permeation chromatography, for example under the following conditions.

Apparatus:       Tosoh Corporation's HLC-8220
Column:          Tosoh Corporation's TSKgel $\alpha$-M
Solvent:         DMF
Temperature:     40°C
Calibration:     Polystyrene

The substrate used in producing the porous sheet material of the invention is not particularly restricted but includes, for example, woven fabrics, knitted fabrics, nonwoven fabrics, felts and raised cloths, made of natural or synthetic fibers (wool, cotton, polyamide, polyester, rayon or mixed fibers composed of two or more of these), and paper sheets, plastics, films, metal sheets, glass sheets and the like. In accordance with the present invention, it is possible to produce sheet materials by peeling off the porous sheets obtained off from these substrates or produce sheet materials amalgamated with the substrates.

In applying the polyurethane solution (E) to a substrate for wet treatment, the application of that solution (coating application and/or impregnation) and the wet treatment can be carried out in the conventional manner of wet treatment, for example by the methods (a), (b), (c) and (d) described in U.S. Patent No. 3,284,274, columns 10-11. As the liquid (nonsolvent) to be used in wet treatment, there may be mentioned solvents which will not dissolve the polyurethane resin of the invention, for example water, ethylene glycol, glycerol, ethylene glycol monoethyl ether and mixtures of these. Preferred is water. Such a nonsolvent as mentioned above alone may be used as the coagulation bath. Alternatively, a mixed bath composed of such a nonsolvent and any of the above-mentioned organic solvents (G) (DMF, DMSO, etc.) may also be used if that mixed solvent will not dissolve the polyurethane resin of the invention.

Also employable are the method which comprises causing coagulation with water and/or water vapor and the method which comprises causing partial coagulation with water vapor, followed by immersion in a coagulation bath. It is also possible to applying to the substrate a colloidal dispersion prepared by adding a nonsolvent, namely one of the nonsolvents mentioned above, to the polyurethane resin solution, followed by immersion in a coagulation bath. The temperature of the coagulation bath is preferably 20 to 60°C.

After wet treatment, the solvent is removed from the sheet, and the sheet is then washed (with water, methanol, etc.) and dried. For promoted removal of the solvent, an anionic, nonionic, cationic or amphoteric surfactant may also be used. Further, crosslinking treatment may be carried out by the method described in British Patent No. 1,168,872.

The porous sheet material obtained in accordance with the invention may also be used as such. It may also be used in the form of laminates for providing the sheet material with further various characteristics. Thus, it is possible to use the porous sheet material in the form of a laminate obtained by applying a polyurethane resin solution or a solution or emulsion of another polymer (e.g. polyvinyl chloride, cellulosic resin) onto the porous sheet material, followed by drying, or in the form of a laminate obtained by joining the sheet material to a coat layer separately formed on a release paper by applying such a polymer solution or emulsion as mentioned above, followed by drying, further followed by peeling off the release paper.

The porous sheet material obtained from the polyurethane resin of the invention is well adapted for wet membrane formation, has good hydrolysis resistance and weather resistance and is excellent in feeling, typically in flexibility, owing to its having uniform micropores.

Therefore, the porous sheet material obtained from the polyurethane resin of the invention is very useful as a leather substitute in a wide range of applications, for example in manufacturing shoes, bags, furniture, car seats and the like.

The following examples illustrate the present invention in further detail. They are, however, by no means limitative of the scope of the invention. In the examples and comparative examples, "part (s) " denotes "part (s) by weight" and "%" denotes "% by weight".

In the examples and comparative examples, the viscosity measurements and porous sheet evaluations were performed in the following manner.

[1] Viscosity

Each sample (polyurethane resin solution) was conditioned in a constant-temperature water maintained at 20°C for 5 hours and then subjected to viscosity measurement using a type B viscometer (Toki Sangyo Co., Ltd.'s type BH viscometer) with a No. 7 rotor at 20 revolutions per minute.

[2] Porous sheet evaluation

(1) Porous sheet preparation

Each polyurethane resin solution was diluted with DMF until a solid matter concentration of 15%, the dilution was applied to a polyester film to a coat layer thickness of 1 mm (wet thickness), and the coated film was immersed in a 30% aqueous solution of DMF (as adjusted to 35°C) for 30 minutes for coagulation. Then, the coated film was washed with warm water at 60°C for 30 minutes and then with water at 25°C for 20 minutes, followed by drying in a hot air drier at 80°C. The sheet was then peeled off from the polyester film. A porous sheet was thus obtained.

(2) Methods of porous sheet evaluation

Each sheet was evaluated as follows.

Cross sectional cell structure: A section of the sheet was observed under an electron microscope (manufacturer: Hitachi, Ltd., model: S-800).

Feeling: Judgment was made by sensory inspection based on the touch and feel to the hand.

Membrane density: A square specimen (10 cm x 10 cm) was cut out from the sheet obtained, the weight (t1) and membrane thickness (v1) thereof were measured, and the membrane density was calculated as follows:

$$\texttt{Membrane density (g/cm}^3\texttt{) = t1/(v1 x 10 x 10)}$$

Example 1

A four-necked flask equipped with a stirrer and a thermometer was charged with 60 parts of a copolycarbonate diol derived from 3-methylpentanediol/1,6-hexanediol (mole percent ratio: 30/70) and having a number average molecular weight of 2,000 (calculated from the hydroxyl value), 140 parts of a copolycarbonate diol derived from 1,9-nonanediol/ 2-methyl-1,8-octanediol (mole percent ratio: 15/85) and having a number average molecular weight of 2,000 (calculated from the hydroxyl value), 12.7 parts of ethylene glycol (hereinafter, "EG" for short), 77.5 parts of MDI and 677 parts of DMF, and the reaction was allowed to proceed at 70°C in a dry nitrogen atmosphere for 15 hours to give a solution of a polyurethane (D-1) with a resin concentration of 30%, a viscosity of 90, 000 mPa·s/20°C and a coagulation value of 3.3.

Example 2

The same reaction vessel as used in Example 1 was charged with 100 parts of a copolycarbonate diol derived from 3-methylpentanediol/1,6-hexanediol (mole percent ratio: 30/70) and having a number average molecular weight of 2,000 (calculated from the hydroxyl value), 100 parts of a copolycarbonate diol derived from 1,9-nonanediol/2-methyl-1,8-octanediol (mole percent ratio: 15/85) and having a number average molecular weight of 2,000 (calculated from the hydroxyl value), 15.2 parts of 1,4-butanediol (hereinafter, "1,4-BG" for short), 68.5 parts of MDI and 662 parts of DMF, and the reaction was allowed to proceed at 65°C in a dry nitrogen atmosphere for 20 hours to give a solution of a polyurethane (D-2) with a resin concentration of 30%, a viscosity of 85,000 mPa·s/20°C and a coagulation value of 4.3.

Example 3

The same reaction vessel as used in Example 1 was charged with 80 parts of a copolycarbonate diol derived from 3-methylpentanediol/1,6-hexanediol (mole percent ratio: 50/50) and having a number average molecular weight of 2,000 (calculated from the hydroxyl value), 120 parts of a copolycarbonate diol derived from 1,9-nonanediol/2-methyl-1,8-octanediol (mole percent ratio: 15/85) and having a number average molecular weight of 2,000 (calculated from the hydroxyl value), 19.2 parts of 1,4-BG, 79.8 parts of MDI and 698 parts of DMF, and the reaction was allowed to proceed at 65°C in a dry nitrogen atmosphere for 20 hours to give a solution of a polyurethane (D-3) with a resin concentration of 30%, a viscosity of 80,000 mPa·s/20°C and a coagulation value of 3.8.

Example 4

The same reaction vessel as used in Example 1 was charged with 40 parts of a copolycarbonate diol derived from 1,5-pentanediol/1,6-hexanediol (mole percent ratio: 20/80) and having a number average molecular weight of 2,000 (calculated from the hydroxyl value), 160 parts of a copolycarbonate diol derived from 1,9-nonanediol/2-methyl-1,8-octanediol (mole percent ratio: 15/85) and having a number average molecular weight of 2,000 (calculated from the hydroxyl value), 19.2 parts of 1,4-BG, 79.8 parts of MDI and 698 parts of DMF, and the reaction was allowed to proceed at 65°C in a dry nitrogen atmosphere for 20 hours to give a solution of a polyurethane (D-4) with a resin concentration of 30%, a viscosity of 80,000 mPa·s/20°C and a coagulation value of 3.0.

Example 5

The same reaction vessel as used in Example 1 was charged with 70 parts of a copolycarbonate diol derived from 3-methylpentanediol/1,6-hexanediol (mole percent ratio: 30/70) and having a number average molecular weight of 2,000 (calculated from the hydroxyl value), 130 parts of a copolycarbonate diol derived from 1,9-nonanediol/2-methyl-1,8-octanediol (mole percent ratio: 15/85) and having a number average molecular weight of 2,000 (calculated from the hydroxyl value) and 70 parts of MDI, and the reaction was allowed to proceed at 80°C in a dry nitrogen atmosphere for 3 hours to give an NCO-terminated urethane prepolymer (NCO percentage = 5.43%) . The urethane prepolymer was cooled to room temperature, 810 parts of DMF was added for uniform dissolution to give a urethane prepolymer solution (NCO percentage = 1.29%). Then, 2.9 parts of water was added, the reaction was allowed to proceed at 55°C for 6 hours and, then, 10 parts of methanol was added to terminate the reaction. A solution of a polyurethane resin (D-5) with a resin concentration of 25%, a viscosity of 20,000 mPa·s/20°C and a coagulation value of 3.5 was obtained.

Comparative Example 1

The same reaction vessel as used in Example 1 was charged with 200 parts of a copolycarbonate diol derived from 3-methylpentanediol/1,6-hexanediol (mole percent ratio: 30/70) and having a number average molecular weight of 2,000 (calculated from the hydroxyl value), 19.2 parts of 1, 4-BG, 79.8 parts of MDI and 698 parts of DMF, and the reaction was allowed to proceed at 70°C in a dry nitrogen atmosphere for 15 hours to give a solution of a polyurethane (D-6') with a resin concentration of 30%, a viscosity of 80,000 mPa·s/20°C and a coagulation value of 6.3.

Comparative Example 2

The same reaction vessel as used in Example 1 was charged with 200 parts of a copolycarbonate diol derived from 1,9-nonanediol/2-methyl-1,8-octanediol (mole percent ratio: 15/85) and having a number average molecular weight of 2,000 (calculated from the hydroxyl value), 8.1 parts of EG, 59 parts of MDI and 623 parts of DMF, and the reaction was allowed to proceed at 65°C in a dry nitrogen atmosphere for 20 hours to give a solution of a polyurethane (D-7') with a resin concentration of 30%, a viscosity of 80,000 mPa·s/20°C and a coagulation value of 1.8.

Comparative Example 3

The same reaction vessel as used in Example 1 was charged with 1 mole (1, 950 parts) of a copolycarbonate diol derived from 3-methylpentanediol/1,6-hexanediol (mole percent ratio: 20/80) and having a number average molecular weight of 1,950 (calculated from the hydroxyl value), 4 mole of MDI (1,000 parts) and 3 mole (270 parts) of 1,4-BG, and the reaction was allowed to proceed at 70°C in a dry nitrogen atmosphere for 20 hours to give a solution of a polyurethane (D-8') with a resin concentration of 30%, a viscosity of 130,000 mPa·s/20°C and a coagulation value of 6.8.

Comparative Example 4

The same reaction vessel as used in Example 1 was charged with 200 parts of a copolycarbonate diol derived from 1,6-hexanediol/1,5-pentanediol (mole percent ratio: 50/50) and having a number average molecular weight of 2,000 (calculated from the hydroxyl value), 18 parts of 1,4-BG, 75 parts of MDI and 684 parts of DMF, and the reaction was allowed to proceed at 65°C in a dry nitrogen atmosphere for 20 hours to give a solution of a polyurethane (D-9') with a resin concentration of 30%, a viscosity of 70,000 mPa·s/20°C and a coagulation value of 7.2.

Comparative Example 5

The same reaction vessel as used in Example 1 was charged with 200 parts of a copolycarbonate diol derived from 1,9-nonanediol/2-methyl-1,8-octanediol/cyclohexanedimethanol (mole percent ratio: 60/30/10) and having a number average molecular weight of 2,000 (calculated from the hydroxyl value), 18 parts of 1,4-BG, 75 parts of MDI and 684 parts of DMF, and the reaction was allowed to proceed at 65°C in a dry nitrogen atmosphere for 20 hours to give a solution of a polyurethane (D-10') with a resin concentration of 30%, a viscosity of 75,000 mPa·s/20°C and a coagulation value of 1.9.

Comparative Example 6

The same reaction vessel as used in Example 1 was charged with 180 parts of a copolycarbonate diol derived from 1,4-BG/1,5-pentanediol (mole percent ratio: 50/50) and having a number average molecular weight of 1,798 (calculated from the hydroxyl value), 18 parts of 1,4-BG, 75 parts of MDI and 673 parts of DMF, and the reaction was allowed to proceed at 65°C in a dry nitrogen atmosphere for 20 hours to give a solution of a polyurethane (D-11') with a resin concentration of 30%, a viscosity of 80, 000 mPa·s/20°C and a coagulation value of 8.8.

Comparative Example 7

The same reaction vessel as used in Example 1 was charged with 200 parts of a copolycarbonate diol derived from 1,4-BG/1,6-hexanediol (mole percent ratio: 73/27) and having a number average molecular weight of 2, 000 (calculated from the hydroxyl value), 26 parts of 1,4-BG, 100 parts of MDI and 760 parts of DMF, and the reaction was allowed to proceed at 65°C in a dry nitrogen atmosphere for 20 hours to give a solution of a polyurethane (D-12') with a resin concentration of 30%, a viscosity of 75, 000 mPa·s/20°C and a coagulation value of 8.8.

Examples 6 to 10 and Comparative Examples 8 to 14

Porous sheets of Examples 6 to 10 and Comparative Examples 8 to 14 were produced by the method described above using the polyurethane resins obtained in Examples 1 to 5 and Comparative Examples 1 to 7, respectively. The sectional cell structure, feeling and membrane density of each sheet were evaluated. The results are shown in Table 1.

## Table 1

| | Example 6 | Example 7 | Example 8 | Example 9 | Example 10 | Comp.Ex.8 | Comp.Ex.9 | Comp.Ex.10 | Comp.Ex.11 | Comp.Ex.12 | Comp.Ex.13 | Comp.Ex.14 |
|---|---|---|---|---|---|---|---|---|---|---|---|---|
| Polyurethane resin | D-1 | D-2 | D-3 | D-4 | D-5 | D-6' | D-7' | D-8' | D-8' | D-10' | D-11' | D-12' |
| Porous sheet sectional cell structure | Uniformly micro-porous | Uniformly micro-porous | Uniformly micro-porous | Uniformly micro-porous | Uniformly micro-porous | Microporous regions interminged with nonporous regions; nonporous regions predominant | Microporous regions interminged with nonporous regions; macroporous regions predominant | Microporous regions interminged with nonporous regions; nonporous regions predominant | Microporous regions interminged with nonporous regions; nonporous regions predominant | Microporous regions interminged with nonporous regions; macroporous regions predominant | Microporous regions interminged with nonporous regions; nonporous regions predominant | Microporous regions interminged with nonporous regions; nonporous regions predominant |
| Feeling | Flexible | Flexible | Flexible | Flexible | Flexible | Hard | Somewhat hard | Hard | Hard | Somewhat hard | Hard | Hard |
| Membrane density(g/cm³) | 0.35 | 0.41 | 0.38 | 0.33 | 0.32 | 0.83 | 0.61 | 0.98 | 1.05 | 0.58 | 1.05 | 1.07 |

The porous material comprising the polyurethane resin for artificial leather according to the invention has the following effects:

1. It forms a uniformly microporous sheet having a flexible feeling.
2. It is excellent in hydrolysis resistance and weather resistance.

Therefore, the porous sheet obtained from the polyurethane of the invention can be applied as a substitute for natural leather in manufacturing shoes, bags, clothes, furniture, car seats, etc.

**Claims**

1. A polyurethane resin for artificial leather manufacture
   which is obtained by reacting a high-molecular diol component (A) comprising a polycarbonate diol (a1) derived from an alkanediol containing 4 to 6 carbon atoms and a polycarbonate diol (a2) derived from an alkanediol containing 7 to 12 carbon atoms, an organic diisocyanate (B) and a chain extender (C), either of the polycarbonate diol (a1) and the polycarbonate diol (a2) being a copolycarbonate diol.

2. The polyurethane resin according to Claim 1
   wherein the high-molecular diol component (A) comprises a copolycarbonate diol (a11) derived from an alkanediol containing 4 to 6 carbon atoms and a copolycarbonate diol (a21) derived from an alkanediol containing 7 to 12 carbon atoms.

3. The polyurethane resin according to any one of Claims 1 to 2
   wherein the polycarbonate diol (a1) and/or the polycarbonate diol (a2) is a copolycarbonate diol derived from a straight-chain alkanediol and a side chain-containing alkanediol.

4. The polyurethane resin according to any one of Claims 1 to 3
   wherein the weight percentage of the polycarbonate diol (a1) to the sum of (a1) and the polycarbonate diol (a2) is not lower than 10% but not higher than 80%.

5. The polyurethane resin according to any one of Claims 1 to 4
   wherein the coagulation value thereof is not lower than 2 but not higher than 5.

6. A porous sheet material which is made from the polyurethane resin according to any one of Claims 1 to 5.

**Patentansprüche**

1. Polyurethanharz zur Kunstlederherstellung,
   welches durch Umsetzen einer hochmolekularen Diolkomponente (A), umfassend ein Polycarbonatdiol (a1), das von einem 4 bis 6 Kohlenstoffatome enthaltenden Alkandiol abgeleitet ist, und ein Polycarbonatdiol (a2), das von einem 7 bis 12 Kohlenstoffatome enthaltenden Alkandiol abgeleitet ist, eines organischen Diisocyanats (B) und eines Kettenverlängerers (C) erhalten wird, wobei sowohl das Polycarbonatdiol (a1) als auch das Polycarbonatdiol (a2) ein Copolycarbonatdiol sind.

2. Polyurethanharz gemäß Anspruch 1,
   wobei die hochmolekulare Diolkomponente (A) ein Copolycarbonatdiol (a11), das von einem 4 bis 6 Kohlenstoffatome enthaltenden Alkandiol abgeleitet ist, und ein Copolycarbonatdiol (a21), das von einem 7 bis 12 Kohlenstoffatome enthaltenden Alkandiol abgeleitet ist, umfasst.

3. Polyurethanharz gemäß einem der Ansprüche 1 bis 2,
   wobei das Polycarbonatdiol (a1) und/oder das Polycarbonatdiol (a2) ein Copolycarbonatdiol ist bzw. sind, das von einem geradkettigen Alkandiol und einem eine Seitenkette enthaltenden Alkandiol abgeleitet ist.

4. Polyurethanharz gemäß einem der Ansprüche 1 bis 3,
   wobei der Gewichtsprozentanteil des Polycarbonatdiols (a1) zur Summe von (a1) und dem Polycarbonatdiol (a2) nicht geringer als 10%, aber nicht höher als 80% ist.

**5.** Polyurethanharz gemäß einem der Ansprüche 1 bis 4,
wobei dessen Koagulationswert nicht geringer als 2, aber nicht höher als 5 ist.

**6.** Poröses Flächenmaterial, welches aus dem Polyurethanharz gemäß einem der Ansprüche 1 bis 5 gefertigt ist.

**Revendications**

**1.** Résine de polyuréthane pour la fabrication de similicuir
laquelle est obtenue en mettant à réagir un composant de type diol de masse moléculaire élevée (A) comprenant un polycarbonate diol (a1) dérivé d'un alcanediol contenant de 4 à 6 atomes de carbone et un polycarbonate diol (a2) dérivé d'un alcanediol contenant de 7 à 12 atomes de carbone, un diisocyanates organique (B) et une agent d'extension de chaîne (C), le polycarbonate diol (a1) ou le polycarbonate diol (a2) étant un copolycarbonate diol.

**2.** Résine de polyuréthane selon la revendication 1
dans laquelle le composant de type diol de masse moléculaire élevée (A) comprend un copolycarbonate diol (a11) dérivé d'un alcanediol contenant de 4 à 6 atomes de carbone et un copolycarbonate diol (a21) dérivé d'un alcanediol contenant de 7 à 12 atomes de carbone.

**3.** Résine de polyuréthane selon l'une quelconque des revendications 1 à 2
dans laquelle le polycarbonate diol (a1) et/ou le polycarbonate diol (a2) est un copolycarbonate diol dérivé d'un alcanediol à chaîne linéaire et d'un alcanediol contenant une chaîne latérale.

**4.** Résine de polyuréthane selon l'une quelconque des revendications 1 à 3
dans laquelle le pourcentage en poids du polycarbonate diol (a1) par rapport à la somme de (a1) et du polycarbonate diol (a2) n'est pas inférieur à 10 % mais n'excède pas 80 %.

**5.** Résine de polyuréthane selon l'une quelconque des revendications 1 à 4
dans laquelle la valeur de coagulation de celle-ci n'est pas inférieure à 2 mais n'excède pas 5.

**6.** Matériau de type feuille poreuse fabriqué à partir de la résine de polyuréthane selon l'une quelconque des revendications 1 à 5.

**EP 1 688 447 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP SHO60195117 B
- JP HEI02289616 B
- JP HEI02158617 B
- JP HEI03140318 B
- JP HEI047327 B
- JP HEI0532754 B
- JP HEI0551428 B
- US 4013702 A
- US 4105641 A
- JP SHO4222719 B
- JP SHO5641652 B
- JP SHO4539634 B
- JP SHO4539635 B
- US 3284274 A
- GB 1168872 A

**Non-patent literature cited in the description**

- **SCHNELL.** *Polymer Reviews,* 1964, vol. 9, 9-20